# EUROPÄISCHE PATENTANMELDUNG

(11) **EP 4 796 445 A1**
(43) Veröffentlichungstag der Anmeldung: **26.08.2026**
(21) Anmeldenummer: 25223539.5
(22) Anmeldetag: 15.12.2025
(51) Int. Cl.: B65B 1/28, B65B 51/04, B65B 51/14, B65B 69/00, B65G 69/18

(54) **VERFAHREN ZUR DURCHTRENNUNG EINER SCHLAUCHFOLIE**

(30) Priorität: 19.02.2025 DE 102025106339; 08.04.2025 DE 102025113695
(71) Anmelder: Hecht Technologie GmbH, 85276 Pfaffenhofen (DE)
(72) Erfinder: Pilsner, Florian, 85276 Pfaffenhofen/Ilm (DE)
(74) Vertreter: Kilian Kilian & Partner mbB

(57) **Zusammenfassung**

Die Erfindung betrifft ein Verfahren zur Durchtrennung einer Schlauchfolie, nachdem ein pulver-/granulatförmiges Produkt durch die Schlauchfolie hindurch zwischen einer Einrichtung und einem Behälter überführt wurde, wobei das Verfahren folgende Schritte aufweist:
Verschließen eines Strömungsquerschnitts der Schlauchfolie in einem Verschlussbereich derart, dass kein Produkt mehr durch den Verschlussbereich der Schlauchfolie hindurch überführt werden kann; und
Durchtrennen des Verschlussbereichs, wobei mindestens ein Querschnittsabschnitt von Querschnittsabschnitten, die durch das Durchtrennen des Verschlussbereiches entstehen, während des Durchtrennens über den Schritt des Durchtrennens hinaus verschlossen wird.

## Beschreibung

Die Erfindung betrifft ein Verfahren zur Durchtrennung einer Schlauchfolie, nachdem ein pulver-/granulatförmiges Produkt durch die Schlauchfolie hindurch zwischen einer Einrichtung und einem Behälter überführt wurde.

Allgemein bekannt sind Verfahren, in denen ein pulver-/granulatförmiges Produkt durch eine Schlauchfolie hindurch zwischen einem Behälter und einer Einrichtung überführt wird. Beispielsweise zeigt die Druckschrift DE 10 2004 005 961 A1 ein entsprechendes Verfahren. Nach Überführung des Produktes wird die Schlauchfolie zweifach abgebunden und zwischen den Abbindungen durchtrennt.

Auch wenn das Abbinden dichtend erfolgt, bilden die durch das Durchtrennen entstehenden Schnittflächen eine Schwachstelle. Restpartikel, die an den Schnittflächen haften, können nach außen austreten und die Umgebung bzw. einen Anwender kontaminieren.

Vor diesem Hintergrund ist es Aufgabe der Erfindung, ein verbessertes Verfahren zur Durchtrennung einer Schlauchfolie zu schaffen, das das Risiko einer Kontamination einer Umgebung oder eines Anwenders vermindert.

Diese Aufgabe löst ein Verfahren nach Anspruch 1. Bevorzugte Ausführungsformen sind Gegenstand der Unteransprüche.

*Das erfindungsgemäße Verfahren zur Durchtrennung einer Schlauchfolie beinhaltet, nachdem ein pulver-*/*granulatförmiges Produkt durch die Schlauchfolie hindurch zwischen einer Einrichtung und einem Behälter überführt wurde, folgende Verfahrensschritte:*
*Verschließen eines Strömungsquerschnitts der Schlauchfolie in einem Verschlussbereich derart, dass kein Produkt mehr durch den verschlossenen Verschlussbereich der Schlauchfolie hindurch überführt werden kann; und*
*Durchtrennen des Verschlussbereichs, wobei mindestens ein Querschnittsabschnitt von Querschnittsabschnitten, die durch das Durchtrennen des Verschlussbereiches entstehen, während des Durchtrennens, über den Schritt des Durchtrennens hinaus, verschlossen wird.*

Die Schlauchfolie ist beispielsweise Teil eines Behälters, in dem das pulver-/granulatförmige Produkt enthalten ist und der in die Einrichtung entleert wird. Alternativ kann die Schlauchfolie Teil eines Behälters sein, in den das pulver-/granulatförmige Produkt aus der Einrichtung gefüllt wird.

In beiden Fällen kann die Schlauchfolie entweder integraler Bestandteil des Behälters sein oder alternativ ein Schlauchfolienstück sein, das einerseits an dem Behälter und andererseits an der Einrichtung befestigt wird.

Besonders bevorzugt ist die schlauchförmige Folie bzw. die Schlauchfolie ein schlauchförmiger Ein-/Auslaufbereich eines Sackes, beispielsweise eines Innensackes eines Fasses, oder ein integraler Bestandteil eines Bigbags, der den Ein- und/oder Auslauf des Bigbags bildet.

Die Schlauchfolie ist beispielsweise eine Kunststoffschlauchfolie, die beispielsweise aus Polyethylen gebildet ist. Die Kunststoffschlauchfolie kann eine Beschichtung, beispielsweise eine Metallkaschierung, wie eine Aluminiumkaschierung, aufweisen oder unbeschichtet sein.

Der Strömungsquerschnitt der Schlauchfolie verläuft quer zu einer Strömungsachse der Schlauchfolie, wobei das pulver-/granulatförmige Produkt bei Überführung zwischen Behälter und Einrichtung entlang der Strömungsachse strömt.

Der Verfahrensschritt des Verschließens des Strömungsquerschnittes erfolgt bevorzugt dadurch, dass die Schlauchfolie in dem Verschlussbereich radial zur Strömungsachse zusammengeschnürt wird und Verschlüsse benachbart zueinander in dem verschlossenen Verschlussbereich befestigt werden.

Die Verschlüsse können vor dem Verfahrensschritt des Durchtrennens zwei gesonderte Elemente oder miteinander verbundene Elemente sein.

In dem Verfahrensschritt des Durchtrennens wird der verschlossene Verschlussbereich so durchtrennt, dass einer der Verschlüsse an einem der entstehenden Schlauchfolienstücke verbleibt und ein weiterer der Verschlüsse an dem anderen entstehenden Schlauchfolienstück verbleibt.

Wenn die Verschlüsse vor dem Durchtrennen miteinander verbunden sind, werden die Verschlüsse bevorzugt durch das Durchtrennen voneinander getrennt.

Die Verschlüsse sind bevorzugt mechanische Verschlüsse, beispielsweise Kabelbinder, die zusammengeschnürt werden oder metallische Klammern, die um den verschlossenen Verschlussbereich gebogen werden.

Alternativ können die Verschlüsse U-förmige Elemente sein, die an den verschlossenen Verschlussbereich so angelegt werden, dass sie den verschlossenen Verschlussbereich der Schlauchfolie umgreifen und ineinander einrasten.

Durch den Verfahrensschritt des Durchtrennens entstehen die Querschnittsabschnitte - einer an dem einen Schlauchfolienstück und ein weiterer Querschnittsabschnitt an dem weiteren Schlauchfolienstück. Die Querschnittsabschnitte verlaufen quer zu der Strömungsachse und wären ohne die Erfindung nach dem Durchtrennen nach außen exponiert. Das Durchtrennen der Schlauchfolie erfolgt insbesondere in Zusammenhang mit einem Wechsel des Behälters.

Erfindungsgemäß wird mindestens einer der Querschnittsabschnitte während des Durchtrennens verschlossen, sodass Restpartikel des pulver-/granulatförmigen Produktes, die sich an der Grenze des Querschnittsabschnittes befinden, nicht mehr nach außen austreten können. Das Verschließen des Querschnittsabschnitts erfolgt über das Durchtrennen hinaus dauerhaft.

Insoweit verringert das erfindungsgemäße Verfahren drastisch das Risiko, dass ein Anwender oder die Umgebung durch die Restpartikel kontaminiert wird.

*Bevorzugt werden in dem erfindungsgemäßen Verfahren die Querschnittsabschnitte während des Durchtrennens über den Schritt des Durchtrennens hinaus verschlossen.* Ergo werden bevorzugt beide Querschnittsabschnitte während des Durchtrennens dauerhaft verschlossen, sodass die Restpartikel des pulver-/granulatförmigen Produktes aus keinem der Querschnittsabschnitte mehr nach außen austreten können.

*Weiterhin bevorzugt wird*/*werden in dem erfindungsgemäßen Verfahren der Querschnittsabschnitt oder die Querschnittsabschnitte während des Durchtrennens stoffschlüssig verschlossen. Bevorzugt kann*/*können in dem erfindungsgemäßen Verfahren der Querschnittsabschnitt oder die Querschnittsabschnitte während des Durchtrennens verschweißt oder mit einem sich verfestigenden Stoff überstrichen werden.*

Das stoffschlüssige Verschweißen kann beispielsweise durch eine Schweißeinrichtung erfolgen. Insbesondere ist die Schweißeinrichtung eine Ultraschallschweißeinrichtung. Diese Ultraschallschweißeinrichtung besitzt beispielsweise einen Trennkeil, der in dem Verfahrensschritt des Durchtrennens den Verschlussbereich der Schlauchfolie durchtrennt und gleichzeitig stoffschlüssig verschweißt.

Der sich verfestigende Stoff, mit dem der Querschnittsabschnitt oder die Querschnittsabschnitte während des Durchtrennens überstrichen wird/werden, ist beispielweise ein Klebstoff oder ein Silikon.

*Alternativ oder zusätzlich kann*/*können der Querschnittsabschnitt oder die Querschnittsabschnitte während des Durchtrennens durch eine Abdeckung verschlossen werden. Die Abdeckung verbleibt dauerhaft an dem jeweiligen Schlauchfolienstück. Beispielsweise bildet die Abdeckung zumindest einen Teil eines für das Durchtrennen eingesetzten Werkzeuges.*

*Die Abdeckung ist bevorzugt zumindest Teil einer Klinge des Werkzeuges, wobei in diesem Fall die Klinge ganz besonders bevorzugt zweiteilig ist. Jeder Teil der mehrteiligen Klinge bildet jeweils eine Abdeckung der Querschnittsabschnitte und verbleibt an einem der Schlauchfolienstücke.*

*Die Erfindung betrifft ebenfalls ein Werkzeug zur Durchführung des Verfahrens wie* es *vorstehend erläutert wurde.*

Im Folgenden werden bevorzugte Ausführungsformen der Erfindung unter Bezug auf die beigefügten Figuren beschrieben.

**Figuren 1A bis 1D** zeigen den allgemeinen Ablauf des Verfahrens gemäß einer bevorzugten Ausführungsform der Erfindung;

**Figur 2** zeigt schematisch eine Schweißeinrichtung, mit der ein erfindungsgemäßer Schritt des Durchtrennens eines verschlossenen Verschlussbereiches der Schlauchfolie erfolgt.

**Figur 3A bis 3D** zeigen Verschlüsse, die einen verbundenen Spannblock beinhalten und zwei Abdeckkappen.

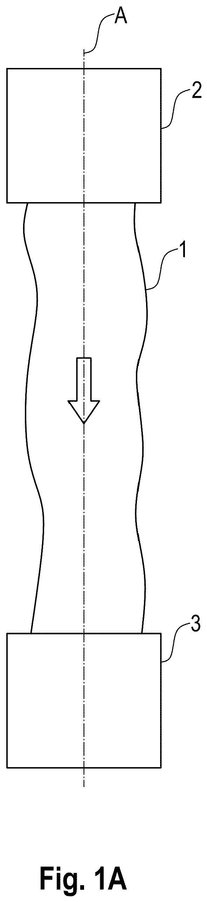

Figur 1 A zeigt einer Ausgangsstellung des erfindungsgemäßen Verfahrens.

Eine Schlauchfolie 1 erstreckt sich zwischen einem Behälter 2 und einer Einrichtung 3. Die Schlauchfolie 1 kann integraler Bestandteil des Behälters 2 sein. Alternativ kann die Schlauchfolie 1 mittelbar, beispielsweise durch ein Spannband, befestigt sein.

Der Behälter 2 kann ein Bigbags sein, wobei die Schlauchfolie 1 einen entsprechenden Auslauf bildet.

Das in Bezug auf den Behälter 2 distale Ende der Schlauchfolie 1 ist an einer Einrichtung 3 befestigt, bevorzugt durch eine Klemmeinrichtung oder mittelbar durch ein Spannband. Die Einrichtung 3 ist beispielsweise eine Produktionsanlage oder ein Silo.

Ein in dem Behälter 2 aufgenommenes pulver-/granulatförmiges Produkt wird durch die Schlauchfolie 1 hindurch von dem Behälter 2 in die Einrichtung 3 überführt. Insoweit wird der Behälter 2 durch die Schlauchfolie 1 hindurch in die Einrichtung 3 entleert.

Die Erfindung ist auf eine Entleerung nicht beschränkt; der Behälter 2 kann alternativ auch durch die Schlauchfolie 1 hindurch befüllt werden. Für diesen Fall ist die Anordnung aus Figur 1A lediglich um 180° zu drehen.

Die Schlauchfolie 1 erstreckt sich zwischen dem Behälter 2 der Einrichtung derart, dass das pulver-/granulatförmige Produkt entlang einer in Figur 1A gezeigten Strömungsachse A durch die Schlauchfolie 1 strömt. Im Schnitt senkrecht zur Strömungsachse A besitzt die Schlauchfolie 1 beispielsweise einen runden Querschnitt mit beispielsweise einem Durchmesser von 50 cm.

Die Schlauchfolie 1 ist beispielsweise eine Kunststoffschlauchfolie, insbesondere aus Polyethylen. Die Kunststoffschlauchfolie 1 kann eine Beschichtung, beispielsweise eine Metallkaschierung, wie eine Aluminiumkaschierung, aufweisen oder unbeschichtet sein.

Das erfindungsgemäße Verfahren betrifft insbesondere ein Durchtrennen der Schlauchfolie, nachdem der Behälter 2 durch die Schlauchfolie 1 hindurch entleert oder befüllt wurde. Das erfindungsgemäße Verfahren besitzt zwei wesentliche Schritte, zum einen ein Verschließen der Schlauchfolie und zum anderen ein Durchtrennen der Schlauchfolie.

Der Verfahrensschritt des Verschließens der Schlauchfolie 1 erfolgt, indem der Strömungsquerschnitt der Schlauchfolie 1 in einem Verschlussbereich derart verschlossen wird, dass kein Produkt mehr durch den Verschlussbereich der Schlauchfolie hindurch überführt werden kann.

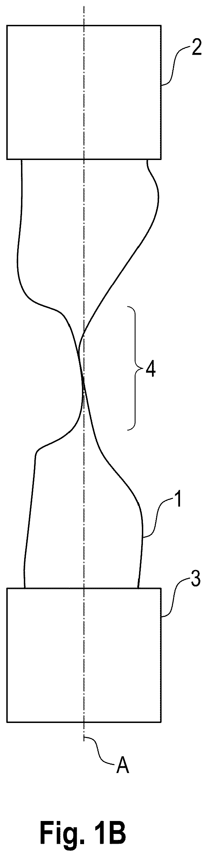

Figur 1B zeigt den entsprechenden Verfahrensschritt.

Ein Anwender oder eine maschinelle Einrichtung ergreift die Schlauchfolie 1 in dem Verschlussbereich 4 an ihrem Außenumfang und verschließt den entsprechenden Strömungsquerschnitt radial zur Strömungsachse A soweit, dass kein pulver-/granulatförmiges Produkt mehr durch die Schlauchfolie 1 hindurch strömen kann. Die in dem Verschlussbereich 4 verschlossene Schlauchfolie 1 kann zusätzlich um die Strömungsachse A verdrillt werden, um eine verbesserte Dichtigkeit zu erreichen.

Anschließend befestigt der Anwender oder die maschinelle Einrichtung in dem Verschlussbereich 4 zwei Verschlüsse 50, 51 benachbart zueinander. Die Verschlüsse 50, 51 sind beispielsweise Kabelbinder, spezielle verrastende Klemmen oder um die Schlauchfolie 1 gebogene Klipps, die die radial verschlossene Schlauchfolie 1 zusammendrücken und den Strömungsquerschnitt dichthalten. Die Verschlüsse 50, 51 sind möglichst nah zueinander angeordnet, besonders bevorzugt so nah zueinander, dass sie aneinander anliegen.

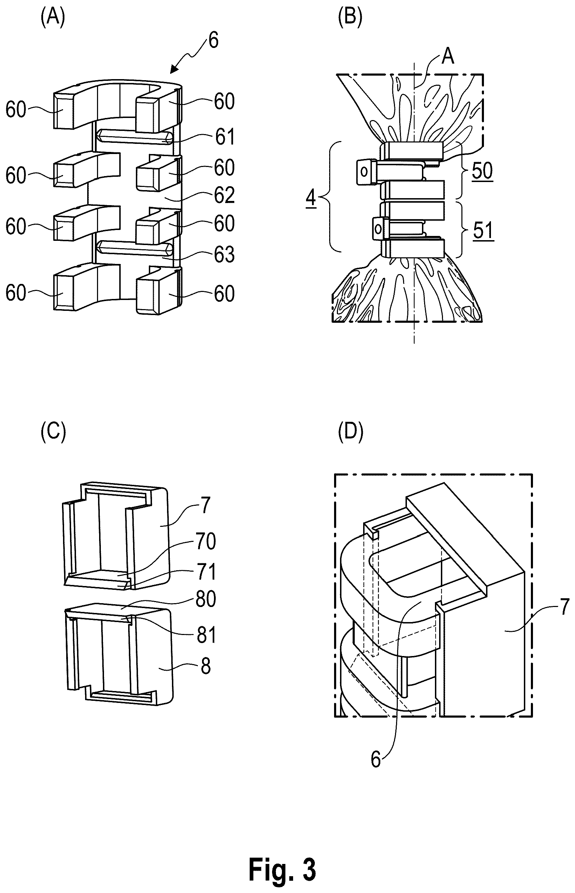

Die Verschlüsse 50, 51 können miteinander verbundene Elemente sein, sodass die Verschlüsse zusammen angelegt werden. Beispielsweise können die Kabelbinder an Blöcken, in denen eine Verzahnung gebildet ist und durch die Laschen der Kabelbinder geführt werden, miteinander verbunden sein. Alternativ können die Verschlüsse 50, 51 einen gemeinsamen Spannblock aufweisen, was weiter unten unter Bezug auf Figur 3A bis 3D verdeutlicht wird.

Nach dem Verfahrensschritt des Verschließens der Schlauchfolie 1 erfolgt der Verfahrensschritt der Durchtrennung der Schlauchfolie 1 zwischen den Verschlüssen 50, 51.

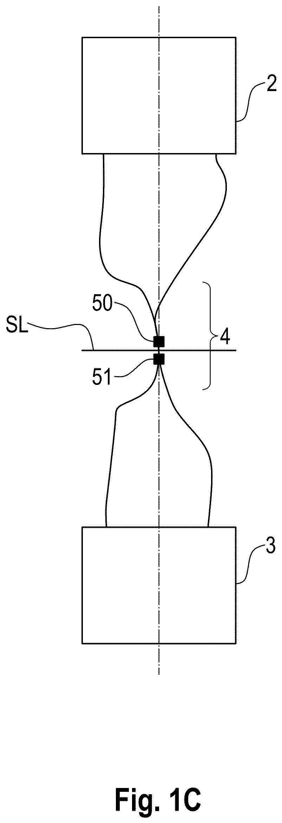

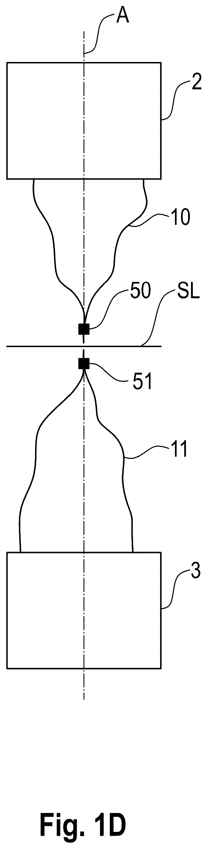

Der entsprechende Schritt ist schematisch in Figuren 1C und 1D angedeutet.

Die Schlauchfolie 1 wird in dem Verschlussbereich 4 durch den Anwender manuell oder durch die maschinelle Einrichtung maschinell entlang der Schnittlinie SL durchtrennt. Der Zustand aus Figur 1C geht damit in den Zustand aus Figur 1D über. Das Durchtrennen der Schlauchfolie 1 erfolgt insbesondere im Rahmen eines Wechsels des Behälters 2.

Aus Figur 1D wird verständlich, dass durch das Durchtrennen zwei Schlauchfolienstücke 10 und 11 resultieren, die an ihren zugewandten Enden jeweils durch einen der Verschlüsse 50, 51 verschlossen gehalten werden.

Mit dem Durchtrennen der Schlauchfolie 1 entstehen Querschnittsabschnitte der verschlossenen Schlauchfolie 1, die an den zugewandten Enden liegen und in Richtung der Strömungsachse A weisen. Ohne die Erfindung würden diese Querschnittsabschnitte nach außen exponiert freiliegen, wobei die Gefahr bestünde, dass Restpartikel des pulver-/granulatförmigen Produktes, die an den die Querschnittsabschnitte bildenden Grenzflächen anhaften, nach außen austreten und die Umgebung bzw. den Anwender kontaminieren.

Die Erfindung verhindert das, indem bevorzugt mindestens eine, bevorzugt beide Querschnittsabschnitte während des Durchtrennens dauerhaft verschlossen werden. Dieses, über den Verfahrensschritt des Durchtrennens hinaus, dauerhafte Verschließen erfolgt bevorzugt durch ein stoffschlüssiges Verschließen oder bevorzugt durch eine Abdeckung.

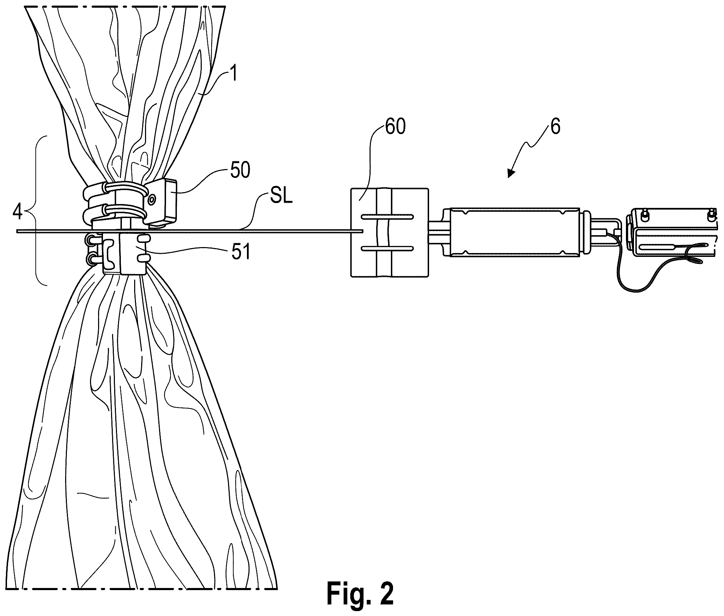

Figur 2 zeigt eine Schweißeinrichtung 6, insbesondere eine Ultraschallschweißeinrichtung, mit einem Trennkeil 60, und die mittels den Verschlüssen 50, 51 verschlossenen Verschlussbereich 4 der Schlauchfolie 1. Die gezeigte Schweißeinrichtung 6 ist beispielsweise eine manuell geführte Schweißeinrichtung, kann aber auch maschinell geführt sein.

In dem Verfahrensschritt des Durchtrennens der Schlauchfolie 1 wird der Trennkeil zwischen die Verschlüsse 50, 51 geführt, was zu einer Erhitzung führt, die einerseits die Schlauchfolie durchtrennt und gleichzeitig verschweißt, sodass die erläuterten Querschnittsflächen der resultierenden Schlauchfolienstücke 10, 11 verschlossen sind.

Alternativ kann das Verschließen der Querschnittsabschnitte auch durch eine jeweilige Abdeckung erfolgen.

Figuren 3A bis 3D zeigt entsprechende Verschlüsse, die zu abgedeckten Querschnittsabschnitten führen.

Die Verschlüsse 50, 51 besitzen einen gemeinsamen Spannblock 6, der im Querschnitt eine U-Form aufweist, indem eine Vielzahl von Armen 60 seitlich abragen. Das Spannblock 6 ist in Figur 3A perspektivisch gezeigt. Die Arme 60 bilden Führungen für die Verschlüsse 50, 51, die wiederum Kabelbinder sind.

Figur 3B zeigt die Verschlüsse 50, 51 und den Spannblock 6 nach dem Schritt des Verschließens der Schlauchfolie 1 in dem Verschlussbereich 4 und Anlegen des Spannblockes 6 und der Kabelbinder 50, 51. Die Vielzahl der Arme 60 umgreift die Schlauchfolie 1 so, dass die Arme 60 die Schlauchfolie 1 in Umfangsrichtung umlaufen. Ein erster Bereich 61 und ein dritter Bereich 63 zwischen den Armen 60 bilden Führungen für die Kabelbinder 50,51, wie es aus Figur 3B ersichtlich ist.

Ein zweiter, mittlerer Bereich 62 bildet eine Führung für eine Klinge, die die Schlauchfolie 1 während des Durchtrennens führt. Der mittlere Bereich 62 kann, wie aus Figur 3B ersichtlich ist, in seinen Abmessungen kleiner sein als der erste Bereich 61 und der dritte Bereich 63.

Figur 3C zeigt eine Abdeckkappe 7 und eine weitere Abdeckkappe 8. Beide Abdeckkappen 7, 8 werden in dem Zustand aus Figur 3B auf den Spannblock 6 gesteckt. Hierbei wird der nächste erfindungswesentliche Schritt des Durchtrennens der Schlauchfolie 1 durchgeführt, der auch zu dem Verschließen der Querschnittsabschnitte führt. Die Abdeckkappen 7, 8 besitzen Abdeckungen 70 und 80, die nach dem Aufstecken der Abdeckkappen 7, 8 auf den Spannblock 6 und dem damit gleichzeitigen Durchtrennen der Schlauchfolie 1 die Querschnittsabschnitte jeweils abdecken.

Vorderkanten 71, 81 der Abdeckkappen 7, 8, die bei dem Aufstecken auf den Spannblock 6 der Schlauchfolie 1 zugewandt sind, sind abgeschrägte Flächen. Durch diese Ausgestaltung der Vorderkanten 71, 81 bilden sie zumindest einen Teil einer Klinge zur Durchtrennung der Schlauchfolie 1 und sorgen dafür, dass die Abdeckungen 70, 80 während des Durchtrennens der Schlauchfolie 1 gut über die Querschnittsabschnitte gleiten. Eine an dem Durchtrennen mitwirkende separate (nicht gezeigte) Klinge kann (in Figur 3C horizontal) zwischen den Abdeckkappen 7, 8 optional angeordnet sein.

Figur 3D zeigt den Spannblock 6 und die Abdeckkappe 7 in einem zusammengesetzten Zustand. Die Kappe 7 und der Spannblock 6 rasten mit entsprechenden Strukturen ineinander ein.

Final wird der Spannblock 6 in dem in Figur 3D gezeigten Zustand geteilt, sodass die bereits erläuterten beiden Schlauchfolienstücke 10, 11 (siehe Figur 1D) entstehen. Das Teilen des Spannblockes kann optional auch in dem Schritt des Durchtrennens der Schlauchfolie 1 mit erfolgen.

Wie bereits erwähnt, erfolgt das Durchtrennen der Schlauchfolie bevorzugt zum Wechsel des Behälters 2. Der Anschluss eines neuen Behälters erfolgt in an sich bekannter Weise, indem das an der Einrichtung 3 verbleibende Schlauchfolienstück 11 von einer neuen Schlauchfolie 1 des neuen Behälters 2 umschlossen und anschließend durch einen nicht gezeigten Eingriff hindurch ausgeschleust wird.

Die Ausführungen vor der Figurenbeschreibung gelten für die Ausführungen gleichermaßen und vice versa.

## Patentansprüche

1. Verfahren zur Durchtrennung einer Schlauchfolie, nachdem ein pulver-/granulatförmiges Produkt durch die Schlauchfolie hindurch zwischen einer Einrichtung und einem Behälter überführt wurde, wobei das Verfahren folgende Schritte aufweist:
Verschließen eines Strömungsquerschnitts der Schlauchfolie in einem Verschlussbereich derart, dass kein Produkt mehr durch den Verschlussbereich der Schlauchfolie hindurch überführt werden kann; und
Durchtrennen des Verschlussbereichs, wobei mindestens ein Querschnittsabschnitt von Querschnittsabschnitten, die durch das Durchtrennen des Verschlussbereiches entstehen, während des Durchtrennens über den Schritt des Durchtrennens hinaus verschlossen wird.

2. Verfahren gemäß Patentanspruch 1, wobei
die Querschnittsabschnitte während des Durchtrennens über den Schritt des Durchtrennens hinaus verschlossen werden.

3. Verfahren gemäß Patentanspruch 1 oder 2, wobei
der Querschnittsabschnitt oder die Querschnittsabschnitte während des Durchtrennens stoffschlüssig verschlossen wird/werden.

4. Verfahren gemäß Patentanspruch 3, wobei
der Querschnittsabschnitt oder die Querschnittsabschnitte während des Durchtrennens verschweißt wird/werden oder mit einem sich verfestigenden Stoff überstrichen wird/werden.

5. Verfahren gemäß einem der Patentansprüche 1 oder 2, wobei
der Querschnittsabschnitt oder die Querschnittsabschnitte während des Durchtrennens durch eine Abdeckung verschlossen wird/werden.

6. Verfahren gemäß Patentanspruch 5, wobei
die Abdeckung zumindest einen Teil eines für das Durchtrennen eingesetzten Werkzeuges bildet.

7. Verfahren gemäß Patentanspruch 6, wobei die Abdeckung eine Klinge des Werkzeuges bildet.

8. Werkzeug zur Durchführung des Verfahrens gemäß einem der Ansprüche 1 bis 7.
